# EUROPÄISCHE PATENTSCHRIFT

(11) **EP 0 631 469 B1**
(45) Veröffentlichungstag und Bekanntmachung des Hinweises auf die Patenterteilung: **20.03.1996**
(21) Anmeldenummer: 92919532.9
(22) Anmeldetag: 15.05.1992
(51) Int. Cl.: A01K 1/01

(54) **SANITÄRE EINRICHTUNG FÜR KATZEN (KATZENTOILETTE)**
SANITARY ARRANGEMENT FOR CATS (CAT TOILETS)
INSTALLATION SANITAIRE POUR CHATS (TOILETTES POUR CHATS)

(43) Veröffentlichungstag der Anmeldung: 04.01.1995
(73) Patentinhaber: REINARTZ, Johann Otto, D-41844 Wegberg (DE)
(72) Erfinder: REINARTZ, Johann Otto, D-41844 Wegberg (DE)
(86) Internationale Anmeldenummer: DE9200781
(87) Internationale Veröffentlichungsnummer: WO9322904

(56) Entgegenhaltungen:
- DE-U- 8 419 845
- DE-U- 8 609 826
- US-A- 4 027 625

## Beschreibung

Die Erfindung betrifft eine Sanitäre Einrichtung für Katzen (Katzentoilette) mit selbsttätiger Reinigung und Nachfüllung von Katzenstreu, nach dem Oberbegriff des Anspruchs 1, wie diese bereits aus DE-U 84 19 845 bekannt ist.

Die Katzentoiletten, die es seit vielen Jahren im Handel gibt, müssen alle von Hand gereinigt werden. d.h. ein oder mehrmals an Tag muß die mit den Fäkalien der Katze verunreinigte Katzenstreu ganz ausgeschüttet oder die Fäkalien mittels einer, ebenfalls in Handel erhältlichen, hierzu geeigneten Schaufel einzel entfernt werden.

Auch der Geruch, der trotz geruchsbindender Katzenstreu, entsteht, ist als Nachteil dieser Katzentoiletten anzusehen.

Eine Katzentoilette mit automatischer Reinigung und Nachfüllung ist vom Erfinder unter DE-C-39 18 121.9-23 bekannt.
Ein näheres Eingehen hierauf ist jedoch nicht notwendig, da sowohl Reinigung als auch Nachfüllung mit anderen als den nachfolgend beschriebenen Mitteln gelöst sind.

Weitere, sich ebenfalls selbstreinigende Katzentoiletten zeigen das DE - U 89 05 314 sowie das DE - U 84 19 845.
Die Nachteile dieser beiden Katzentoiletten wurden bereits in der Patentschrift DE-C-39 18 121.9-23 vom Erfinder geschildert.

Da es einer Katze nichts ausmacht, wenn man sie vorübergehend alleine in der Wohung läßt, ist in den letzten Jahren die Zahl der Katzen, die in Haushalten von Berufstätigen leben, enorm gestiegen.

Dies vorausgeschickt und die Reinlichkeit von Katzen kennend, ist bei längerer Abwesenheit natürlich die Gefahr gegeben: daß die Katze, wenn ihr die Katzentoilette als nicht mehr sauber genug erscheint, ihr 'Geschäft' an einem anderen, ihr hierfür geeignet erscheinenden Platz in der Wohnung erledigt.

Der Erfindung liegt die Aufgabe zugrunde, eine Katzentoilette vorzuschlagen, die zum einen den Erfordernissen modernster Tierhaltung zum Nutzen des Tieres, zum anderen sowohl der Hygiene als auch der Bequemlichkeit des Menschen Rechnung trägt.

Diese Aufgabe wird durch die kennzeichnenden Merkmale des Anspruchs 1 gelöst, da es sich hier um eine Sanitäre Einrichtung für Katzen (Katzentoilette) handelt, die sich nach jeder Benutzung durch die Katze selbsttätig reinigt und mit frischer Katzenstreu versorgt.

Nachfolgend ist ein Ausführungsbeispiel beschrieben.

Die Katzentoilette besteht aus zwei rechteckigen, Teilen, die aufeinander gesetzt werden, einer Schublade, einem separaten Versorgungsturm mit einer Dosiervorrichtung und einen flexiblen: austauschbaren Boden.

Das rechteckige, wannenförmige Unterteil (1), das nach oben offen ist, hat über die gesamte Breite gehend, in der rechten Schmalseite eine öffnung (4), durch die eine separate, zur Aufnahme einer austauschbaren Entsorgungskassette (7) geeigneten Schublade (6) in das Unterteil (1) geschoben werden kann.

Das zweite, ebenfalls rechteckige Teil (2), das auf das Unterteilt (1) aufgesetzt wird, ist sowohl nach oben als auch nach unten hin offen.
Zwischen Unterteil (1) und Oberteil (2) läuft der flexible, austauschbare Boden (8), der an seiner Unterseite Querstege und an beiden Längsseiten eine Verzahnung hat.

An der linken Seite des Unterteils (1) wird mittels einer hierzu geeigneten Vorrichtung ein Versorgungsturm (9) befestigt, der zur Aufnahme von frischer Katzenstreu ausgelegt ist und dessen Unterseite abgeschrägt ist.

In der Schräge im unteren Teil des Versorgungsturmes (9) befindet sich eine Dosiervorrichtung (10). Die Sensoren (14) sind im Versorgungsturm (9) installiert.

Sowohl das Betreten als auch das Verlassen der Katzentoilette durch die Katzen wird von den Sensoren registriert.
Wenn die Katze die Katzentoilette verlassen hat beginnt, mit einer Zeitverzögerung, der Reinigungs- und Nachfüllvorgang.
Der flexible Boden, der beidseitig gezahnt ist, wird. mittels jeweils zwei Zahnrädern, die sich entgegengesetzt bewegen, an der Schräge und hinter dem Versorgungsturm hochgezogen.
Hierbei wird die benutzte Katzenstreu durch die sich im abgeschrägten Unterteil des Versorgungsturmes befindliche frische Katzenstreu abgestreift und der flexible Boden gereinigt und die benutzte Katzenstreu fällt in die in der Schublade befindliche, austauschbare Entsorgungskassette.

Bei der Vorwärtsbewegung wird der gereinigte flexible Boden mit frischer Katzenstreu aus dem Versorgungsturm versorgt, deren Menge mittels einer einstellbaren Dosiervorrichtung geregelt werden kann.

Gleichzeitig verteilen die sich an der Unterseite des flexiblen Bodens befindlichen Querstege die benutzte Katzenstreu in der Entsorgungskassette.

Nachdem der flexible Boden wieder in seiner Ausgangsposition ist kann die Katzentoilette erneut benutzt werden.

Der oben beschriebene Bewegungsablauf wird durch einen Getriebemotor angetrieben und durch Sensoren ausgelöst und gesteuert.

Die Energieversorgung erfolgt durch Batterien.

Wie das zuvor beschriebene Ausführungsbeispiel zeigt, muß diese Katzentoilette nicht mehr von Hand gereinigt werden.

Die benutzte Katzenstreu ist in der Schublade luftdicht abgeschlossen und kann durch die austauschbare Entsorgungskassette mühelos, ohne mit den Fäkalien in Berührung kommen zu müssen, entfernt werden.

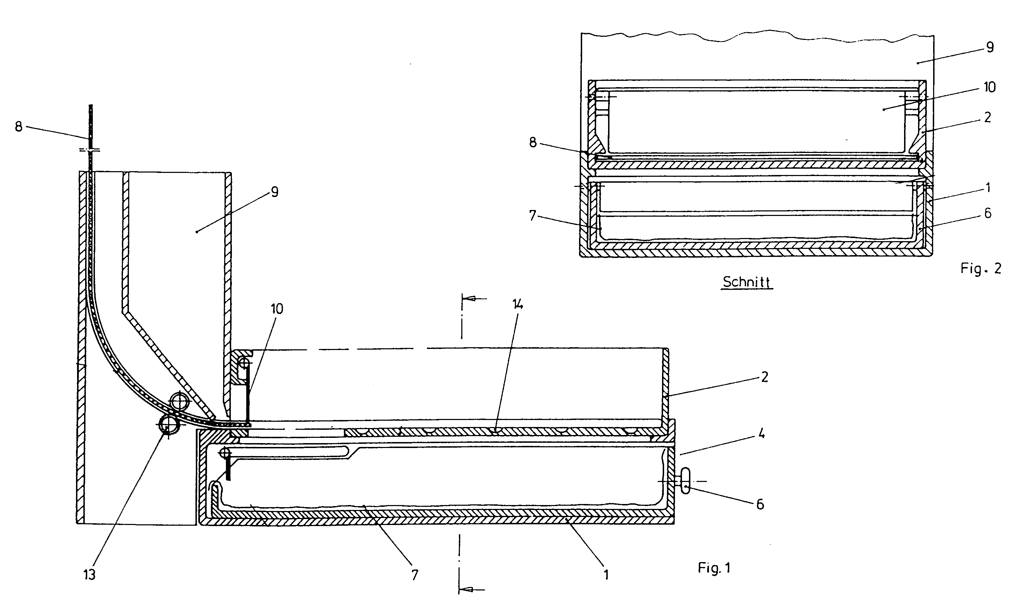

## Patentansprüche

1. Sanitäre Einrichtung für Katzen, Katzentoilette, die aus
einem rechteckigen, wannenförmigen, in Gebrauchsstellung nach oben hin offenen Unterteil (1), das in einer der beiden Schmalseiten eine über die gesamte Breite gehende öffnung (4) hat, und einem Oberteil (2), das auf das Unterteil (1) aufsetzbar ist, besteht, wobei die besagte Einrichtung eine zur Aufnahme einer auswechselbaren Entsorgungskassette (7) geeignete Schublade (6), einen flexiblen austauschbaren Boden (8) und einen zur Aufnahme von frischer Katzenstreu ausgelegten Versorgungsturm (9) umfaßt, der an der der Schublade (6) gegenüberliegenden Seite des Unterteils (1) befestigt ist und im unteren Teil der dem Unterteil (1) zugewandten Seite eine Dosiervorrichtung (10) hat,
dadurch gekennzeichnet,
daß die Einrichtung einen flexiblen, austauschbaren Boden (8) aufweist, der so ausgelegt ist, daß er an seiner Unterseite mit Querstegen versehen ist, die die benutzte Katzenstreu in der Entsorgungskassette verteilen, und daß er an beiden Langsseiten der Unterseite verzahnt ist, wobei sich am Versorgungsturm (9) über die gesamte Höhe an beiden Seiten laufend eine Nut befindet, in der der flexible Boden läuft.

2. Sanitäre Einrichtung für Katzen,
nach Anspruch 1,
dadurch gekennzeichnet,
daµ sie aus einem rechteckigen, wannenförmigen, in Gebrauchsstellung nach oben offenen Unterteil (1), das aus Plastik ist, besteht.

3. Sanitäre Einrichtung für Katzen,
nach den Ansprüchen 1 und 2,
dadurch gekennzeichnet,
daß das rechteckige, wannenförmige, aus Plastik bestehende Unterteil (1) eine öffnung an einer der beiden Schmalseiten hat, die so ausgelegt, daß sie zur Aufnahme einer separaten Schublade (6) geeignet ist.

4. Sanitäre Einrichtung für Katzen,
nach den Ansprüchen 1 bis 3,
dadurch gekennzeichnet,
daµ auf das rechteckige, wannenförmige Unterteil (1) ein zweites Teil, das Oberteil (2), das so ausgelegt ist, daß es nach oben und unten offen ist, aufgesetzt wird.

5. Sanitäre Einrichtung für Katzen,
nach den Ansprüchen 1 bis 4,
dadurch gekennzeichnet,
daß die separate Schublade (6) so ausgelegt ist,
daß sie zur Aufnahme einer auswechselbaren Entsorgungskassette(7) geeignet ist.

6. Sanitäre Einrichtung für Katzen,
nach den Ansprüchen 1 bis 5,
dadurch gekennzeichnet,
daß an der linken Seite der Katzentoilette ein Versorgungsturm (9) angebracht ist, der so ausgelegt ist, daß er frische Katzenstreu aufnehmen und diese dosiert auf den gereinigten, flexiblen Boden (8) verteilen kann.

7. Sanitäre Einrichtung für Katzen,
nach den Ansprüchen 1 bis 6,
dadurch gekennzeichnet,
daß der flexible Boden (8) so ausgelegt ist, daß er an seiner Unterseite mit Querstegen versehen ist, die die benutzte Katzenstreu in der Entsorgungskassette (7) verteilen, und daß er an beiden Längsseiten der Unterseite verzahnt ist.

8. Sanitäre Einrichtung für Katzen,
nach den Ansprüchen 1 bis 7,
dadruch gekennzeichnet,
daß der flexible Boden (8) sich mittels Zahnrädern (13), angetrieben durch einen Getriebemotor, durch den Versorgungsturm (9) nach oben bewegt und bei seiner Rückwärtsbewegung durch die im Versorgungsturm befindliche frische Katzenstreu abgestreift und gereinigt wird.

9. Sanitäre Einrichtung für Katzen,
nach den Ansprüchen 1 bis 7,
dadurch gekennzeichnet,
daß der flexible Boden (8) bei seiner Vorwärtsbewegung mit frischer Katzenstreu aus dem Versorgungsturm (9) versehen wird, deren Menge mittels einer verstellbaren Dosiervorrichtung (10) geregelt werden kann.

10. Sanitäre Einrichtung für Katzen,
nach den Ansprüchen 1 bis 9,
dadurch gekennzeichnet,
daß sich in der Katzentoilette Sensoren (14) befinden, die den Reinigungs- und Nachfüllvorgang auslösen.

## Claims

1. Sanitary unit for cats (cat toilet) consisting of
a rectangular, tub-shaped lower part (1) that is open at the top and that has an opening (4) across the entire width of one of its narrow sides;
a second rectangular part (2) which is designed to be set onto the lower part (1) and that is open to the top an bottom side;
and at which the signified unit has a drawer(6) that is suitable for holding an exchangeable, disposable cassette (7), an exchangeable flexible floor (8) provided with transverse webs on its underside for distributing the used cat liter in the waste receptacle and with a toothing along both sides of the underside, a separate supply tower (9) designed to take up fresh cat litter, which is mounted on the opposit e side of the opening (4) in the rectangular, tub-shaped lower part (1) an provided with a dosing device (10) in the lower part of the side facing the rectangular, tub-shaped lower part (1), and which has a groove that extends over the entire height on both sides and in which the flexible bottom (8) runs.

2. Sanitary unit for cats (cat toilet) according to claim 1
characterized by
the fact that the rectangular, tub-shaped bottom part (1), which is made of plastic, is open in the upward direction.

3. Sanitary unit for cats (cat toilet) according to claim 1 and 2
characterized by
the fact that the rectangular, tub-shaped plastic bottom part (1) has an opening (4) in one of its narrow sides, suitable to take up a separate drawer (6).

4. Sanitary unit for cats (cat toilet) according to claim 1 to 3
characterized by
the fact that a second, upper part (2), open in both the upward and downward direction, is set on the rectangular, tub-shaped bottom part (1).

5. Sanitary unit for cats (cat toilet) according to claim 1 to 4
characterized by
the fact that the separate drawer (6) is designed to take up a replaceable waste cassette (7).

6. Sanitary unit for cats (cat toilet) according to claim 1 to 5
characterized by
the fact that a supply tower (9) mounted on the opposite side of the opening (4) in the rectangular, tub-shaped bottom part (1), is designed to take up fresh cat litter and to distribute a dosed quantity thereof on the cleaned flexible bottom (8).

7. Sanitary unit for cats (cat toilet) according to claim 1 to 6
characterized by
the fact that the flexible bottom (8) is provided with transverse webs on its underside for distributing the used cat litter in the waste receptacle (7), and with toothing along both sides of the underside.

8. Sanitary unit for cats (cat toilet) according to claim 1 to 7
characterized by
the fact that the flexible bottom (8), by means of toothed gears (13) driven by a geared motor, moves upward throught the supply tower (9) and is stripped and cleaned by the fresh cat litter stored in the supply tower when moving backward.

9. Sanitary unit for cats (cat toilet) according to claim 1 to 8
characterized by
the fact that the flexible bottom (8) on its forward movement is supplied with fresh cat litter from the supply tower (9) and that the quantity of fresh cat litter can be controlled by means of an adjustable dosing device (10).

10. Sanitary unit for cats (cat toilet) according to claim 1 to 9
characterized by
the fact that the unit is provided with sensors (14) for triggering the cleaning and refill process.

## Revendications

1. Installation sanitaire pour chats (toilette pour chats),
caractérisée en ce qu'elle se compose d'une partie inférieure (1) rectangulaire,
en forme de bac, ouverte dans son haute en position d'emlpoi et portant dans l'un des côtés étroits une ouverture (4) qui s'étend sur toute la largeur, et d'une partie supérieure (2) à placer sur la partie inférieure (1), le dispositif étant prévu pour recevoir un tiroir (6) adapté à recevoir une cassette d'élimination échangeable (7), un fond flexible échangeable (8) concu de facon à porter des entretoises transversales dans sa partie inférieure, servant à répartir la litière usée dans la cassette d'élimination, et que le fond en question porte des dentures sur les deux côtés longitudinaux de la partie inférieure et entoure une tour d'alimentation (9) faite pour contenir la litière fraiche et fixée au côté de la partie inférieure (1), une rainure étant pratiquée sur la tour d'alimentation (9) sur toute sa hauteur aux deux côtés et dans laquelle s'engage le fond flexible (8).

2. Installation sanitaire pour chats (toilette pour chats) selon la revendication 1,
caractérisée en ce qu'elle se compose d'une partie inférieure (1) rectangulaire, en matière plastique, en form de bac, ouverte vers le haut en position d'emploi.

3. Installation sanitaire pour chats (toilette pour chats) selon les revendications 1 et 2,
caractérisée en ce que la partie inférieure (1) rectangulaire, en form de bac en matière plastique porte une ouverture à l'une des deux côtés étroits, concue pour recevoir un tiroir séparé (6).

4. Installation sanitaire pour chats (toilette pour chats) selon les revendications 1 à 3,
caractérisée en ce que sur la partie inférieure (1) rectangulaire en form de bac vient se poser une seconde pièce, la partie supérieure (2), concue de facon à être ouverte vers le haut et vers le bas.

5. Installation sanitaire pour chats (toilette pour chats) selon les revendications 1 à 4,
caractérisée en ce que le tiroir séparé (6) est adapté à recevoir une cassette d'élimination (7) échangeable.

6. Installation sanitaire pour chats (toilette pour chats) selon les revendications 1 à 5,
caractérisée en ce que le côté de la toilette pour chats qui se trouve en face de le côté qui est ouverte (4), porte une tour d'alimentation (9), concue elle-même de facon à pouvoir recevoir dela litière fraiche et à pouvoir répartir celle-ci à l'état dosé sur le fond flexible (8) nettoyé.

7. Installation sanitaire pour chats (toilette pour chats) selon les revendications 1 à 6,
caractérisée en ce que le fond flexible (8) est équipé a sa partie inférieure d'entretoises transversales qui répartissent la litière usée dans la cassette d'elimination (7) et qu'il porte des dentures aux deux côtés longitudinaux de la partie inférieure.

8. Installation sanitaire pour chats (toilette pour chats) selon les revendications 1 à 7,
caractérisée en ce que le fond flexible (8) se déplace vers le haut à travers la tour d'alimentation (9) au moyen des roues dentées (13) entraînées par un moteur d'entraînement, et est raclé et nettoyé lors de sa marche arrière par la litière fraiche qui se trouve dans la tour d'alimentation (9).

9. Installation sanitaire pour chats (toilette pour chats) selon les revendications 1 à 8,
caractérisée en ce que le fond flexible (8) est équipée lors de sa marche en avant de litière fraiche provenant de la tour d'alimentation (9) dans la quantité est réglée au moyen d'un dispositif de dosage réglable (10).

10. Installation sanitaire pour chats (toilette pour chats) selon les revendications 1 à 9;
caractérisée en ce que des palpeurs (14) se trouvent dans la toilette pour chats, qui déclenchent l'opération de nettoyage et de remplissage.
